(19) Europäisches Patentamt
European Patent Office
Office européen des brevets

(11) Publication number: 0 328 219 A1

(12) **EUROPEAN PATENT APPLICATION**

(21) Application number: 89200284.1

(22) Date of filing: 06.02.89

(51) Int. Cl.4: C08F 4/02 , C08F 4/04 , C09C 3/08 , C09C 1/36 , C08F 292/00

(30) Priority: 08.02.88 NL 8800285

(43) Date of publication of application: 16.08.89 Bulletin 89/33

(84) Designated Contracting States: AT BE CH DE ES FR GB GR IT LI NL SE

(71) Applicant: TECHNISCHE UNIVERSITEIT EINDHOVEN
Den Dolech 2
NL-5612 AZ Eindhoven(NL)

(72) Inventor: Caris, Carola Huberta Maria
Kapellerlaan 213
NL-6045 AE Roermond(NL)
Inventor: German, Anton Leendert
Malagijsweg 42
NL-5625 HG Eindhoven(NL)

(74) Representative: Hoogstraten, Willem Cornelis Roeland et al
OCTROOIBUREAU DSM Postbus 9
NL-6160 MA Geleen(NL)

(54) **A process for the preparation of polymers in emulsion, pigment particles and a process for the modification of pigment particles.**

(57) The invention relates to a process for the preparation of polymers in emulsion, pigment particles and a process for the modification of these pigment particles.

The polymerisation is effected in the presence of inorganic particles, for example pigment particles, with a covalently bound radical initiator function.

EP 0 328 219 A1

# A PROCESS FOR THE PREPARATION OF POLYMERS IN EMULSION, PIGMENT PARTICLES AND A PROCESS FOR THE MODIFICATION OF PIGMENT PARTICLES

The invention relates to a process for the preparation of polymers in emulsion, pigment particles and a process for the modification of pigment particles.

Preparation of polymers in emulsion is described in EP-A-104498. Emulsion polymers can be used in water-based paints (so-called latex paints). In the paint industry great attention must now be paid to reducing the emission of solvents from paints on account of the associated environmental problems. These problems can possibly be solved by replacing oil-based paints, in which the polymer binding agent is dissolved in an organic solvent in which the pigment particles are dispersed, by water-based paints, in which the polymer binding agent and the pigment particles are dispersed separately in the aqueous phase. These polymer binding agents can be prepared by means of emulsion polymerisations in aqueous media, after which paint pigment particles are added to the solution. The advantages of these latex paints with respect to oil-based paints are therefore the fact that they contain no organic solvents, which means that the costs are lower, that they do not produce an unpleasant odour, that these paints are environmentally sound and are not flammable or toxic and, moreover, that they can be easily diluted with water. However, a disadvantage of the use of latex paint is that the dispersed pigment or the filler coagulates. This coagulation has an adverse effect on the properties of the paint because large pigment agglomerates are formed, which are difficult to redisperse and which therefore result in a decrease in the covering power of the paint. In addition, these agglomerates produce a rough surface, as a result of which the paint film is not weatherresistant and, moreover, is not glossy. The covering power of a paint depends on the degree of refraction (which is fixed for each combination of binding agent and pigment), on the light- reflectance and lightscattering at the surface of the pigment particles in the hardened pigment layer and on the degree of light absorption (which is characteristic of a certain colour of paint). The covering power of white paint is determined by the lightscattering power of the pigment layer. This lightscattering power is influenced by the regularity of the arrangement of the pigment particles in the layer and by the shape of the particles themselves. The shape of the particles can be regulated by effective control of the grinding and dispersing methods. Maximum covering power and gloss are obtained when the pigment particles are optimally spaced. If the particles are irregularly spaced and the size of the particles differs considerably from the desired particle size, due to agglomeration, the gloss and covering power of the paint will consequently decrease considerably. In order to develop a glossy latex paint with good covering power it is therefore important to prevent coagulation of the pigment.

The object of the invention is to provide a process for an emulsion polymerization, pigment particles, and a process for the modification of pigment particles with which the aforementioned disadvantages can be prevented.

The process according to the invention is characterized in that the polymerization is effected in the presence of inorganic particles, preferably pigment particles, with a covalently bound radical initiator function.

According to a preferred embodiment of the invention the radical initiator function of the inorganic particle consists of a diazo compound, preferably an aromatic diazo compound.

Suitable inorganic particles are, for instance, pigment particles and/or filler particles, such as calcium carbonate, silicon dioxide, aluminium oxide, antimony oxide, iron oxide, zinc oxide, nickel oxide and titanium dioxide particles. Preferably a pigment particle, in particular a titanium dioxide particle, is chosen as inorganic particle. The inorganic particles are used in amounts between 10 and 90 wt% (with respect to the monomers to be polymerized), preferably between 20 and 75 wt%.

According to a preferred embodiment of the invention the inorganic particle, the pigment particle or the titaniumdioxide particle is modified with an amino compound. An amino compound is here understood to be a compound containing an amino group or a compound containing a group that can be converted into an amino group, after which the amino group is converted into a diazo compound or modified herewith. Suitable amino compounds are, for example, compounds containing titanate, zirconate and/or silane groups or mixtures hereof or compounds containing the reaction product of thionylchloride and phenyllithium.

Preferably a titanate is used as amino compound, more particularly a titanate with an aromatic amino end group such as isopropyl-4-aminobenzenesulphonyldidodecylbenzenesulphonyl titanate. An example of such a titanate is KR 26 S (supplied by Kenrich Petrochemicals):

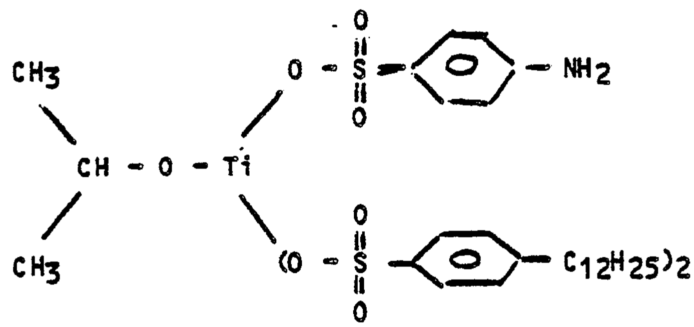

Other suitable titanates that are or can be modified with aromatic amino end groups are, for example, isopropylisostearyldimethacryl titanate, diisopropylisostearylmethacryl titanate, isopropyl-4-aminobenzenesulphonyldi(dodecyl)benzenesulphonyl titanate, alkoxytrimethacryl titanate, alkoxytriacryl titanate and/or neoalkoxytri(m-amino)phenyl titanate.

The modification may be effected in solvents such as dichloromethane, diethyl ether, chloroform, isopropanol, butoxyethanol, xylene and/or toluene.

Examples of suitable mixtures containing the aforementioned titanates are 90 wt% isopropylisostearyldimethacryl titanate and 10 wt% isopropanol, 86 wt% diisopropylisostearylmethacryl titanate and 14 wt% methacrylic acid or 80 wt% isopropyl-4-aminobenzenesulphonyldi(dodecyl)benzenesulphonyl titanate, 15 wt% 2-butoxy-ethanol and 5 wt% isopropanol.

As zirconates or silanes neoalkoxytri(m-amino)phenyl zirconate or p-nitrobenzyl trichlorosilane may, for example, be used.

The compound may be used in amounts between 0.5 and 2.0 wt% with respect to the inorganic particle, the pigment particle or the titaniumdioxide particle.

If an inorganic particle, a pigment particle or a titaniumdioxide in the emulsion polymerisation according to the invention is used, a good chemical bond is obtained between the particle and the polymer, because, for example, a titanate with an aromatic amino group is bound to the surface. This titanate is converted into an initiator by diazotization of the aromatic amino group and a subsequent reaction with a compound with an acid H atom. The initiator of the diazo type obtained can start up the polymerization by thermal decomposition. The aromatic amino group can be converted into a diazo initiator with, for example, $NaNO_2$ and HCl, which conversion is then followed by another reaction with, for example, β-naphthalenethiol, 1-naphthol, 2-naphthol, β-naphthalenesulphonic acid or phenol.

Beside the possibility of a diazotization of the aromatic aminogroup on the surface of the particle it is also possible to bound a molecule having already a diazogroup to the aromatic aminogroup. An example is 4,4′-azo-bis-cyanopentanoic acid which is converted into the acid chloride and which next reacts with the aromatic aminogroup.

The inorganic particles, pigment particles or titanium dioxide particles in the emulsion polymerisation according to the invention may also be used in combination with the usual emulsion polymerization initiators such as potassium persulphate, 4,4-azobiscyanopentanic acid and azoisobutyronitrile.

The inorganic particles, pigment particles or titanium dioxide particles in the emulsion polymerisation according to the invention may contain a peroxide compound as radical initiator function.

Indeed a siliciumdioxide particle with an azo compound as initiator is described as initiator compound in Journal of Applied Polymer Science (Vol. 34, 2125-2137 (1987) at page 2128) however it does not concern emulsion polymerisation or compounds which are related to latex paints.

The pigment particles and titanium dioxide particles with radical initiator function and a method to produce them are part of the invention.

Usually the main components of an emulsion polymerization (which is for example described in Encyclopedia of Polymer Science and Engineering, Second Edition, Volume 6, page 1-51) are initiators, emulsifiers, monomers and water. The initiator is usually water-soluble, which means that the radicals are formed in the aqueous phase. At the beginning of the reaction the emulsifier is in the form of micells because the reaction is carried out above the cmc (critical micell concentration) of the emulsifier. The monomer is practically insoluble in water, which means that part of the monomer is dissolved in the micells and part is in the aqueous phase in the form of large drops. The water constitutes the continuous phase of the system. This aqueous phase still contains traces of free monomer and emulsifier. The emulsion polymerisation is, for example, carried out at temperatures between 50¤C and 70¤C and at pressures between 1 and 2 atmospheres.

If the emulsion polymerisation is carried out in the presence of an inorganic particle, pigment particle or titaniumdioxide particle according to the invention, the preferred choice of the amount of the emulsifier is different than described above.

When for example a titanium dioxide particle modified with titanate is introduced into an aqueous solution, a portion of the emulsifers will be adsorbed on the hydrophobic titaniumdioxide surface. By modification of the titaniumdioxide particle with titanates which contain except the aminofunctional groups other groups such as aromatic groups or alkyl groups, the surface becomes more hydrophobic of character. Because of this, the cmc of the emulsifier in this system will appear to increase. The polymerisations according to the invention are by preference carried out just below or on the (apparent) cmc, which means that the emulsifiers surround the titanium dioxide particles and do hardly form micells in the aqueous phase. The polymerization according to this process takes place almost exclusively at the titanium dioxide surface. This is dependent of the ratio between titaniumdioxide and monomers.

According to a preferred embodiment of the invention the surface of the inorganic particle, pigment particle and titaniumdioxide particle has a substantially hydrophobic character.

The hydrophobic character of the modified particles can be expressed by the amount of emulsifier which adsorbs to the surface of the particle, for example the titaniumdioxide particle. If sodiumlaurylsulphate is chosen, this amount is higher than $2 \cdot 10^{-6}$ mol/gr titaniumdioxide, preferably higher than $4 \cdot 10^{-6}$ mol/gr titaniumdioxide. Very good results are obtained in the range between $7 \cdot 10^{-6}$ and $15 \cdot 10^{-6}$ mol/gr titaniumdioxide. The amount of adsorbed emulsifier is determined by conductometric titration at 20¤C in a system which contains 66,67 gram $TiO_2$ per liter. Unmodified titaniumdioxide adsorbs no measurable amounts of emulsifiers.

Suitable monomers are monomers with poor or moderate solubility in water which can (co)polymerize via a radical mechanism and/or monomers with polar groups that can be adsorbed on the surface. Examples are (meth)acrylic acid, (meth)acrylates, such as for example methyl(meth)acrylate, ethyl(meth)-acrylate and butyl(meth)acrylate, styrene (derivatives), vinyl esters, vinyl ethers and/or vinyl halides. Suitable amounts of monomer are between 0.2 and 60 wt% with respect to the reaction mixture. Examples of suitable emulsifiers are sodium lauryl sulphate, palmitate, stearate, dodecylbenzene sulphonate, polyethylene oxide, polyvinyl alcohol and/or hydroxyethyl cellulose. Suitable amounts of emulsifiers are between 0.6 amd 30.0 wt%, by preference between 7.5 and 12.0 wt% with respect to the titaniumdioxide.

By applying the process according to the invention coagulation of pigment particles and/or filler particles during the film-forming process is prevented by the formation of a chemical bond between the polymer and the pigment particle and/or filler particle.

US-A-3884871 describes a process for coating titanium dioxide pigment particles by dispersing pigment in water, adding a vinylmonomer with polar groups to the dispersion and the monomer being adsorbed by the pigment, adding an organic vinylmonomer to the dispersion and next polymerising in the presence of a catalyst. As contrasted with the present invention the monomers are adsorbed to the surface. Besides this process according to US-A-3884871 is only applicable with polar monomers through which only a polar homo- or copolymer can be produced. Besides the charge of the surface of the particles has to be opposed to the charge of the monomer, through which only certain combinations of particles and monomers at a certain pH are possible. A problem related to adsorption is the appearance of desorption, which is of importance in polar media, such as water. According to US-A-3884871 a crosslinking agent is necessary to prevent the resulting polymers from being swollen by water or even are solubilized in water.

US-A-3346535 describes a carbon-azoinitiator complex which can be applied in the emulsionpolymerisation of vinylmonomers, the polymer thus propagates from the surface of the carbon. Such emulsion polymerisation are principally started by the initiator fragments being liberated in the solution. There is only very few polymer bound to the surface. Furthermore in fact it concerns an adsorption of the catalyst to the surface by way of a bound by a salt. In polar solutions desorption can again appear.

US-A-3971753 describes an initiator with one or more polar functional groups which adsorb to the surface of fillers, such as titaniumdioxide. Examples of initiators are succinic acid peroxide and t-butyl azoformamide. The bond between filler and initiator is due to the carboxylic- or carboxamide groups. This system is not suitable for emulsion polymerisation.

The emulsion polymers obtained according to the invention are preferably used in latex paints. These latex paints may also contain other film-forming components and the usual additives such as dispersing agents, anti-foaming agents, thickeners, colourants, sof tening agents, stabilizers, cross-linking agents and/or flow improvers. Examples of suitable latex systems are systems on the basis of styrene and butylacrylate (50/50 parts by weight) or methylmethacrylate and butylacrylate (50/50 parts by weight) which contain, for example, 2-3 wt% methacrylic acid.

The invention can be used with all types of inorganic particles that are to be provided with a polymer.

Fillers generally have a particle size between 0.1-100 µm, preferably between 1 and 80 µm. Preferably pigments are used, the pigments have a particle size between 0.001-5 µm, preferably between 0.1 and 0.5 µm.

In latex system applications the particle size of the pigment particles or filler particles must be such that a good degree of light scattering is obtained, for example titanium dioxide particles with a particle size of preferably between 0.2 and 0.3 µm. In general, the chosen diameter of the pigment particle is about half of the wavelength of visible light. The diameter and the surface of the inorganic paricles are important, for example with respect to the amount of initiator that can be applied and the amount of polymer that can be bound.

The particles according to the invention may be added to or be incorporated in polymers or polymer dispersions on the basis of, for example, urethanes, epoxies and/or acrylates.

The amounts of binding agent, pigment and/or filler and the emulsifier can be chosen such that the mixture constituted by the aforementioned components can be used as paint. Another possibility is to add a pigment and/or filler to a latex system instead of, or in combination with, the usual pigments and/or fillers.

The emulsion polymers according to the invention result in an excellent compatability with polymers, excellent weather resistanoe, excellent water resistance and a good tensile strength.

Other fields of application are, for example, composites and catalyst supports.

The invention will be elucidated with the aid of the following examples without, however, being limited thereto.

## Example I

### Modification of $TiO_2$ with titanate (KR 26 S)

0.040 g of KR 26 S was weighed into a 100 ml erlenmeyer. This amount of KR 26 S was dissolved in 100 ml of isopropanol in an ultrasonic bath. Next, 4.00 g of untreated $TiO_2$ was weighed into a 200 ml erlenmeyer, after which this $TiO_2$ was dispersed for half an hour in 100 ml of isopropanol with the aid of a magnetic stirrer. Then the KR 26 S solution was added to the $TiO_2$ and nitrogen was led through this mixture for 5 minutes, after which it was closed off with a stopper and left to react, with stirring, for two hours.

After two hours the mixture was centrifuged (for 30 minutes, at 5000 rpm), after which it was washed two more times with isopropanol and centrifuged to remove the excess titanate. The solids were then dried in a vacuum for 20 hours at room temperature.

## Example II

### Modification of $TiO_2$ with titanate (KR 26 S)

50 g of unmodified $TiO_2$, 0.5 g of KR 26 S and 50 g of glass beads (0 = 1 mm) were introduced into 250 ml of dichloromethane and then vigorously shaken with an agitator for 2 hours. Then the glass beads were sieved from the mixture and the $TiO_2$ was centrifuged, washed 3 times with dichloromethane, centrifuged and dried under a vacuum at 20¤C.

## Example III

### Diazotization of $TiO_2$/KR 26 S with HCl and $NaNO_2$

4.00 g of $TiO_2$/KR 26 S (according to example I) was dispersed in 10 ml of distilled water in a weighing bottle with a stopper for 5 minutes. Then 5 ml of concentrated hydrochloric acid (37%) was added and the reaction mixture was cooled to 0¤C in an ice bath. 20 ml of 4 M fresh $NaNO_2$ solution was then added, with stirring, and the reaction mixture was stirred for 10 minutes at 0-2¤C. Then the solids were removed by filtration (pore diameter of the filter 0.05 µ) and washed once with ice water. The solids were then once

again dispersed in 10 ml of distilled water. After 5 minutes 40 ml of 0.4 M β-naphthalenethiol solution (1 : 1 thiol - NaOH) was added, after which the reaction mixture was stirred for 15 more minutes at 0-2¤C. The solids were filtered through a membrane filter (pore diameter 0.05 μ) and washed three times with ice water as well as with cold ether.

Then the solids were freeze-dried and the initiator was stored cold (-20¤C).

## Example IV

### Diazotization of $TiO_2$/KR 26 S

6.3 g of $TiO_2$/KR 26 S (according to example II) was dispersed in 30 ml of water for 30 seconds with the aid of an 'Ystral stirring unit' (a disperser supplied by Ystral). This dispersion was then transferred to an erlenmeyer (of 300 ml) and placed on a magnetic stirrer in an ice bath. 6.3 ml of concentrated hydrochloric acid was added dropwise, after which the mixture was stirred for 5 more minutes at 0¤C. Then a fresh solution of 2.1 g of $NaNO_2$ in 25 ml of distilled water was added dropwise. When all the nitrite had been added (after 30 min), the mixture was left to react for 5 more minutes. The solids were removed by filtration (through a cellulose acetate ester membrane filter), washed twice with distilled ice water (40 ml) and dispersed in 10 ml of ice water, after which a solution of 2.4 grams of β-naphthalenethiol (0.01 5 mol) and 0.6 g (0.015 mol) of NaOH in 25 ml of distilled water were added, which turned the reaction mixture yellow. After 30 minutes the solids were removed by filtration (through a teflon membrane filter) and washed with ice water until the yellow colour had disappeared. Then the mixture was washed two more times with cold ethanol and twice with cold ether. The product was dried in the air at 0¤C and then stored at a temperature between -20 and -10¤C.

## Example V

### Polymerization of methylmethacrylate in the presence of titanium dioxide modified with titanate (KR 26 S).

25 ml of water, 1 ml of isopropanol, 0.0923 g of sodium lauryl sulphate and 0.9902 g of $TiO_2$ were mixed at a temperature of 0¤C. This $TiO_2$ had been modified with a β-naphthalenethiol initiator (according to example IV) and was dispersed in the mixture with the aid of an 'Ystral' at 0¤C. Then 3.00 g of methylmethacrylate was added, with stirring. Nitrogen was led through the mixture for 30 minutes at 0¤C. Then the vessel containing the reaction mixture was sealed below nitrogen and connected to a thermostatted bath with a temperature of 55¤C. From this moment onwards (t = 0) samples were taken at different intervals and the degree of conversion was determined with the aid of a gas chromatograph. The reaction mixture was stirred with the aid of a magnetic stirrer.

TABLE 1

| Time(min) | Conversion (%) | Time (min) | Conversion (%) |
|---|---|---|---|
| 20 | 1.5 | 81 | 83.0 |
| 25 | 17.5 | 91.5 | 87.0 |
| 30 | 36.2 | 103.5 | 91.5 |
| 44 | 49.3 | 125 | 93.6 |
| 55 | 59.8 | 145 | 97.9 |
| 61 | 65.1 | 175 | 99.3 |
| 71 | 71.5 | 256 | 99.5 |

The product obtained was dried with the aid of a steam bath, after which 2.5994 grams were extracted with toluene for 30 hours in a Soxhlet extractor. 0.2213 grams of the product dissolved, which means that 89% of the polymer obtained was bound to the pigment.

Example VI

Polymerization of methylmethacrylate

1.10 g of $TiO_2$ modified with phenol initiator (according to example IV, but using 1.6 grams of phenol instead of 2.4 grams of naphathelenethiol) and 3.30 g of methylmethacrylate were added to a solution consisting of 0.0916 g of sodium lauryl sulphate and 1.0 ml of isopropanol in 32.3 ml of water. After $N_2$ had been led through the mixture for half an hour, the temperature was brought to 55¤C. The conversion was followed with the aid of a gas chromatograph.

TABLE 2

| Time (min) | Conversion (%) | Time (min) | Conversion (%) |
|---|---|---|---|
| 90 | 10.9 | 240 | 77.2 |
| 105 | 12.2 | 269 | 82.0 |
| 150 | 44.3 | 277 | 78.8 |
| 200 | 58.6 | 289 | 86.4 |
| 224 | 70.9 | 373 | 96.9 |

Example VII

Polymerisation of methylmethacrylate

A solution of 0.0915 g of sodium lauryl sulphate and 1.0 ml of isopropanol in 32.3 ml of distilled water was prepared in a reaction vessel. This solution was cooled to 0¤C and 3.30 g of methylmethacrylate was added, after which nitrogen was led through the mixture for 30 minutes (0¤C). Then 1.10 g of $TiO_2$ modified with 1-naphthol initiator (according to example IV but using 2.16 g of 1-naphthol instead of 2.4 grams of naphthalenethiol) was added and $N_2$ was led through the mixture for another 5 minutes. Then the reaction mixture was sealed and connected to a thermostatted bath of 55¤C. The mixture was stirred with the aid of a magnetic stirrer.

TABLE 3

| Time (min) | Conversion (%) | Time (min) | Conversion (%) |
|---|---|---|---|
| 30 | 0 | 94 | 85.0 |
| 50 | 25.6 | 99 | 90.6 |
| 80 | 57.6 | 113 | 94.1 |
| 87 | 77.2 | 141 | 97.7 |
| 92 | 83.0 | 279 | 99.4 |

One portion of the initiator was stored at a temperature below 0¤C for 2 weeks and it was found that it had not lost any of its effect after this period.

The product was evaporated over a steam bath, after which 2.4559 g was subjected to Soxhlet extraction. 0.3538 g of polymethylmethacrylate (not bound to $TiO_2$) was extracted with toluene in a period of 29 hours. This means that 81% of the polymethylmethacrylate was bound to the $TiO_2$.

Example VIII

1.50 g of 4,4′-azo-bis(cyano-pentanoic acid) was dispersed in 15 ml benzene at 0¤C. Then 3.00 g phosphoruspentachloride was added, after which the mixture was stirred for 15 minutes at 0¤C. Next the mixture was brought to room temperature and another three hours stirred. Then the nearly clear solution was subjected to a filtration and a vacuum-evaporation at room temperature resulting in a yellow pasta. The product was washed two times with 5 ml of a diethylether/hexane (1 : 3) mixture and the liquid was removed by decant. The product was dissolved in dichloromethane and next precipitated with hexane. It was extracted after which the process was repeated. The isolated product was dried in the air at room temperature. 1.09 g white needle crystals of 4,4′-azo-bis-cyano-pentanoyl chloride were obtained. This acid chloride was dissolved in dichloromethane and added to a dispersion of $TiO_2$/KR 26 S (according to Example II) in dichloromethane. Next triethylamine was added after which the mixture (in the presence of glasspearl with a diameter of 2 mm) was shaked.

The modified $TiO_2$ was isolated by centrifuging the mixture, after which it was washed three times with destilled water, three times with ethanol and three times with diethyl-ether. It was dried in the air at room temperature.

Comparative Example A

Emulsionpolymerisation of MMA in the presence of unmodified $TiO_2$

1.00 g unmodified $TiO_2$ (rutile) was dispersed in some solutions with different concentrations sodiumlaurylsulfate (29 ml), to which 1 ml isopropanol was added, with the aid of an "Ystral stirring unit". Then 3.00 g methylmethacrylate (MMA) and 0.003 g 4,4′-azo-bis-cyanopentanoate as an initiator were added. Because of the fact that the surface of $TiO_2$ at this pH (= 7) has a positive charge, the initiator which had a negative charge was adsorbed at the surface of the particle and the polymer could be formed at the $TiO_2$. The reaction was stopped at the moment that the conversion of the monomer was about 100% and the product was centrifuged during 5 minutes with about 3000 rpm. By this method the heavy parts ($TiO_2$ with eventually polymer) were separated. This product was washed three times with a solution of sodiumlaurylsulphate (3 g/l) to remove the free polymethylmethacrylate parts and next three times with destilled water to remove the excess emulsifier. The product was dried with the aid of a steambath and next the polymer content was determined by the decrease of the weight of the dry powder after one hour at 600¤C.

TABLE 4

| concentration sodiumlaurylsulphate (g/l) | percentage PMMA in solid material (%) |
|---|---|
| 2,50 | 9,3 |
| 2,81 | 8,2 |
| 3,02 | 7,9 |
| 3,99 | 9,8 |

The polymer content of the solid material was low.

Example IX

Polymerisation of MMA on the surface of $TiO_2$ modified with an initiator

The polymerisation was executed according to Comparative Example A. However, in this example $TiO_2$ was applied, which was modified with an initiator according to Example VIII. The polymer content of $TiO_2$ was determined as described in Comparative Example A.

TABLE 5

| concentration sodiumlaurylsulphate (g/l) | percentage PMMA in solid material (%) |
|---|---|
| 2,50 | 33,4 |
| 2,79 | 51,4 |
| 3,04 | 40,3 |
| 3,99 | 45,7 |

A comparison with Comparative Example A shows that in the case of a covalently bound initiator less polymer is washed from the surface than in the case of an absorbed initiator.

Example X

Polymerisation of different monomers on the surface of $TiO_2$ modified with an initiator

The polymerisation was executed according to Example IX, with $TiO_2$ which was modified according to Example VIII with 4,4′-azo-bis-cyano-pentanoylchloride. The concentration of sodiumlaurylsulphate was 2,41 g/l.

TABLE 6

| monomer | percentage polymer in solid material (%) |
|---|---|
| methylmethacrylate | 30,6 |
| ethylmethacrylate | 22,7 |
| butylacrylate | 57,6 |
| styrene | 47,4 |

The more hydrophobic the monomer was the more polymer was bound.

Comparative Example B

a) Modidication of $TiO_2$ with isopropyldimethyacrylisostearoyltitanate (KR 7 of Kenrich)

10,3268 gr $TiO_2$ (rutile) was dispersed with glass beads in 25 ml dichloromethane to which 0,1062 gr KR 7 was added. After 1,5 hours at room temperature and vigorously shaken with an agitator the glass beads were removed and the modified $TiO_2$ was isolated by centrifuging. Next the product was washed with $CH_2Cl_2$ and dried at the air. By this method a monomer group was bound covalently to the surface of the particles.

b) Polymerisation of MMA in the presence of $TiO_2$/KR 7

1,33 g $TiO_2$/KR 7 (obtained as described above) was dispersed in a sodiumlaurylsulphate solution with a concentration of 2,36 g/l (with the aid of an "Ystral-stirring-unit"). 4,00 g MMA and 0,04 g sodium 4,4′-azo-bis-cyanopentanoate as initiator were added to this dispersion. The polymerisation was executed under nitrogen at 55¤C. $TiO_2$ was isolated by centrifuging when the monomer was nearly completely conversed and was next washed with a sodiumlaurylsulphate solution (3 g/l) and water. After drying with the aid of a steam bath the solid product was heated during 1 hour to 600¤C. The content of polymer was 15.5 %.

Consequently in case of a covalently bound initiator much more polymer is bound to the polymer (Example IX) than in case of a comonomer covalently bound to the surface.

## Claims

1. Process for the preparation of polymers in emulsion, characterized in that, the polymerisation is effected in the presence of inorganic particles with a covalently bound radical initiator function.

2. Process for the preparation of polymers in emulsion, characterized in that, the polymerisation is effected in the presence of pigment particles with a covalently bound radical initiator function.

3. Process for the preparation of polymers in emulsion, characterized in that, the polymerisation is effected in the presence of titanium dioxide particle with a covalently bound radical initiator function.

4. Process according to any one of claims 1-3, characterized in that the surface of the inorganic particle, pigment particle and titanium dioxide particle has a substantially hydrophobic character.

5. Process according to any one of claims 1-3, characterized in that the radical initiator function is a diazo compound.

6. Process according to claim 5, characterized in that the radical initiator function is an aromatic diazo compound.

7. Pigment particle with a covalently bound radical initiator function.

8. Titanium dioxide particle with a covalently bound radical initiator function.

9. Particles according to any one of claims 7-8, characterized in that the surface of the particle has a substantially hydrophobic character.

10. Process for the modification of a pigment particle, or a titaniumdioxide particle, characterized in that the particle is modified with a compound containing an amino group or with a compound containing a group that can be converted into an amino group, after which the amino group is converted into a diazo compound or modified herewith.

11. Process according to claim 10, characterized in that a titanate, zirconate or silane compound is used as amino compound.

12. Process according to claim 11, characterized in that a titanate is used as amino compound.

13. Process for the preparation of polymers in emulsion, characterized in that the polymerization is carried out in the presence of a pigment particle or a titanium dioxide particle obtainable with a process according to any one of claims 10-12.

14. Emulsion polymer obtainable with the process according to any one of claims 1-6 or 13.

15. Latex paint comprising an emulsion polymer according to claim 14.

European Patent Office

# EUROPEAN SEARCH REPORT

Application Number

EP 89 20 0284

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 346 535 (H.G.G. DEKKING)<br>* Column 2, lines 23-29; column 3, lines 31-38; column 5, lines 35-40; column 7, lines 39-42 * | 1,4,5,7,9,13,14 | C 08 F 4/02<br>C 08 F 4/04<br>C 09 C 3/08<br>C 09 C 1/36<br>C 08 F 292/00 |
| A | EP-A-0 154 739 (R.W. MARTIN)<br>* Claim 1; pages 35-36, example 1 * | 1-15 | |
| A | EP-A-0 054 832 (THE DOW CHEMICAL CO.)<br>* Page 11, example 1; claim 4 * | 1-15 | |
| A | US-A-3 884 871 (F. HERMAN et al.)<br>* Claim 1; column 6, lines 46-48 * | 1,7,8 | |
| A | US-A-3 971 753 (A.C. FRECHTLING et al.)<br>* Column 1, lines 48-50; column 2, lines 9-12,59-68; column 3, lines 1-13 * | 1,7,8 | |
| A | US-A-3 891 572 (A.G. MOODY et al.) | | |

TECHNICAL FIELDS SEARCHED (Int. Cl.4)

C 09 C
C 08 F

The present search report has been drawn up for all claims

| Place of search | Date of completion of the search | Examiner |
|---|---|---|
| THE HAGUE | 24-04-1989 | MINI A.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)